# EUROPEAN PATENT APPLICATION

(11) **EP 4 804 611 A1**
(43) Date of publication of application: **09.09.2026**
(21) Application number: 24886097.5
(22) Date of filing: 21.10.2024
(51) Int. Cl.: H04W 28/18, H04W 28/24, H04L 41/0894, H04W 4/24, H04W 76/10, H04W 8/18, H04W 88/14

(54) **TETHERING SERVICE METHOD**

(30) Priority: 02.11.2023 US 202363547135 P
(71) Applicant: LG Electronics Inc., Yeongdeungpo-gu Seoul 07336 (KR)
(72) Inventor: KIM, Hyunsook, Seoul 06772 (KR); KIM, Laeyoung, Seoul 06772 (KR); YOUN, Myungjune, Seoul 06772 (KR)
(74) Representative: Jung, Minkyu
(86) International application number: PCT/KR2024/015949
(87) International publication number: WO 2025/095422

(57) **Abstract**

The present disclosure provides a method. The method comprises the steps of: an SMF receiving, from a UE, a NAS message related to a PDU session for the UE; on the basis that the UE has a support capability for a tethering service using a tethered device, the SMF stores first state information indicating an enable state of the support capability of the UE before the SMF receives the NAS message, the NAS message includes second state information indicating the enable state of the support capability of the UE, and the first state information is different from the second state information, the SMF determining that the enable state of the UE has been changed; on the basis of the determination, the SMF requesting an update on a PCC rule from a PCF, the request including the second state information regarding the enable state; and on the basis of the request, the SMF receiving the updated PCC rule from the PCF.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In relation to a tethering service, a method is required in which a policy and/or a rule is provided to a terminal and nodes of a network.

### DESCLOSURE

### TECHNICAL SOLUTION

Based on a change in whether a tethered device support function of a terminal is enabled or disabled, the SMF requests a new rule from the PCF.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a PDU session establishment procedure to which implementations of the present disclosure is applied.
FIG. 8 shows an example of a flowchart according to the first embodiment of the present specification.
FIG. 9 shows an example of a flowchart according to the second embodiment of the present specification.
FIG. 10 and FIG. 11 show examples of flowcharts according to the third embodiment of the present specification.
FIG. 12 shows the procedure of the SMF according to disclosure of the present specification.
FIG. 13 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

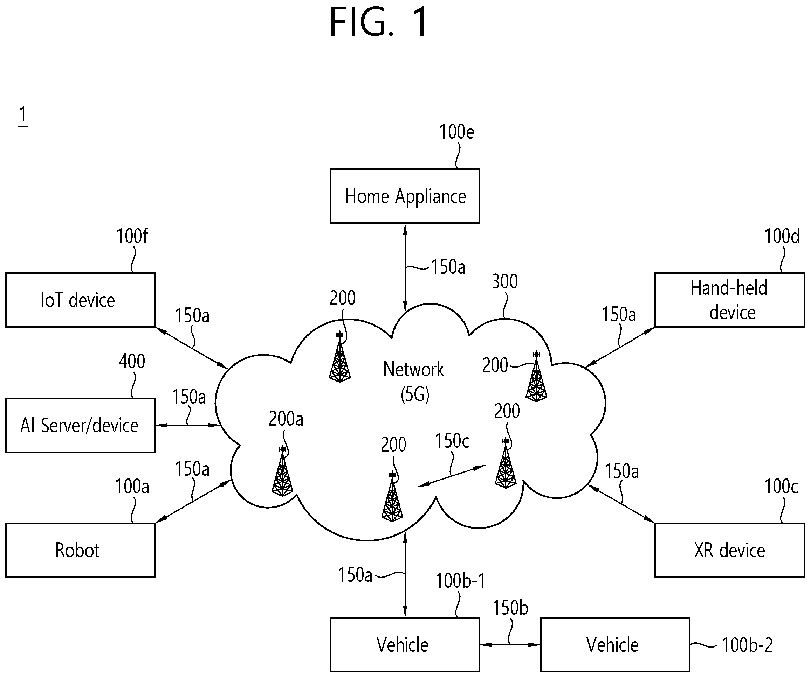

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

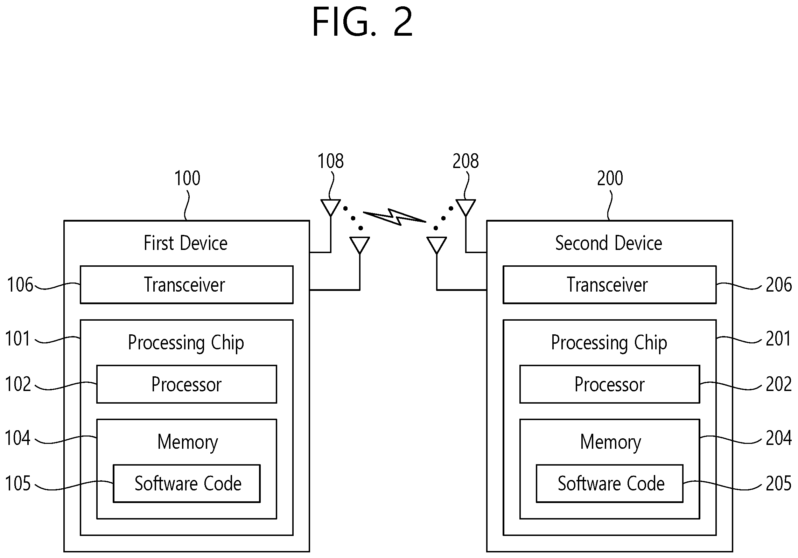

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

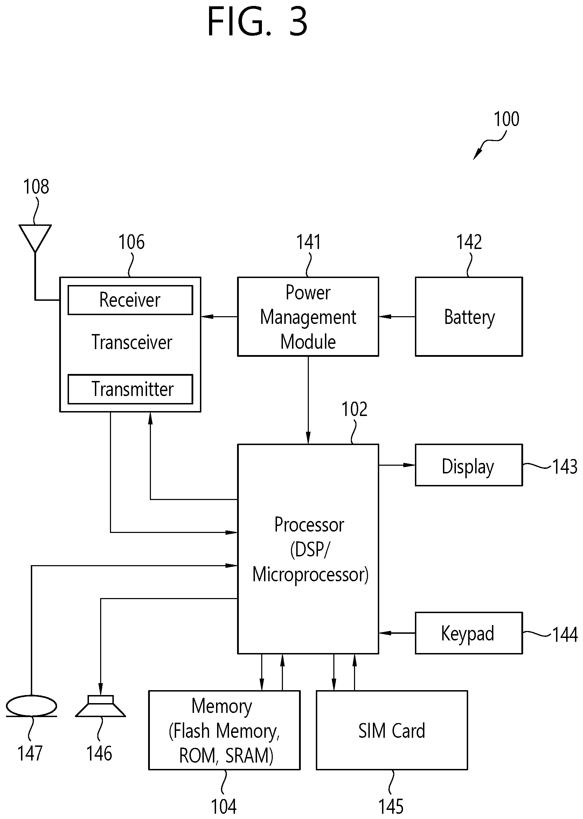

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{TM} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

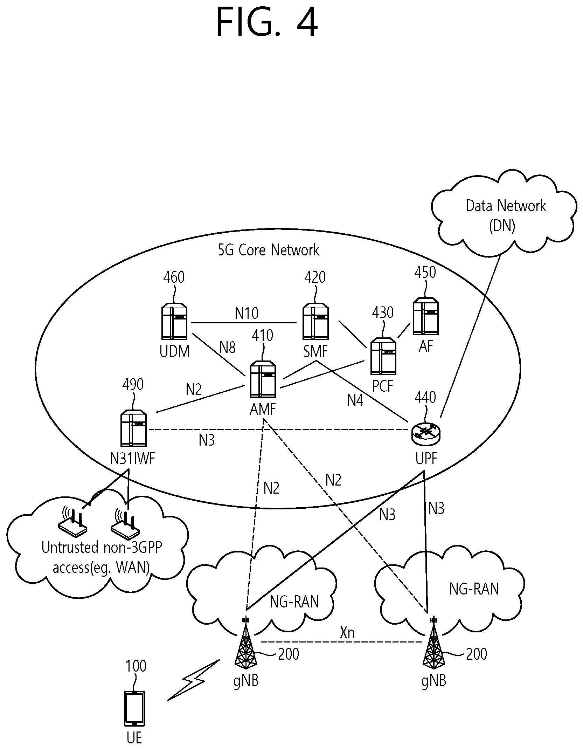

**FIG. 4** **is a block diagram of a next generation cellular network.**

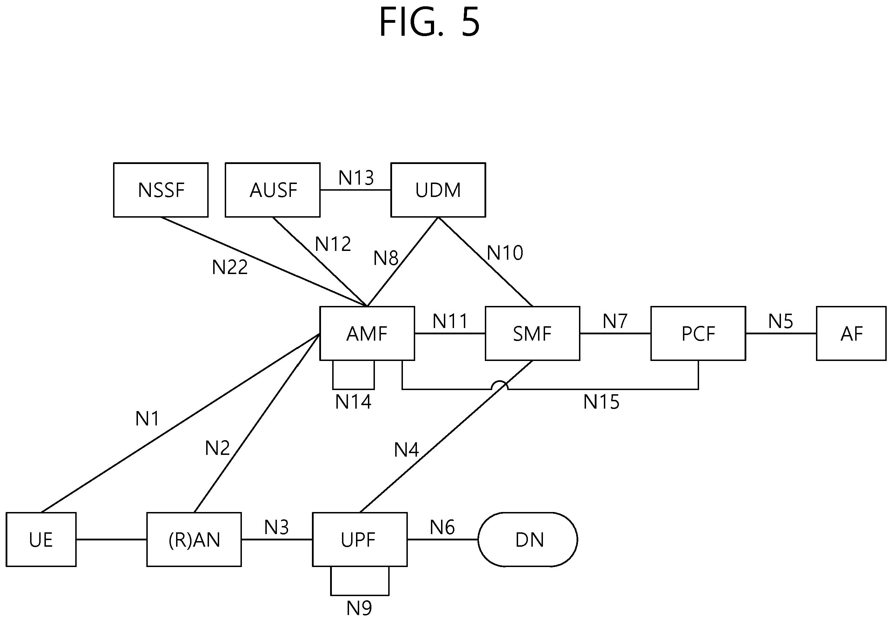

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### < PDU session establishment procedure >

A PDU session establishment procedure is described. Section 4.3.2 of 3GPP TS 23.502 V16.3.0 (2019-12) can be referred.

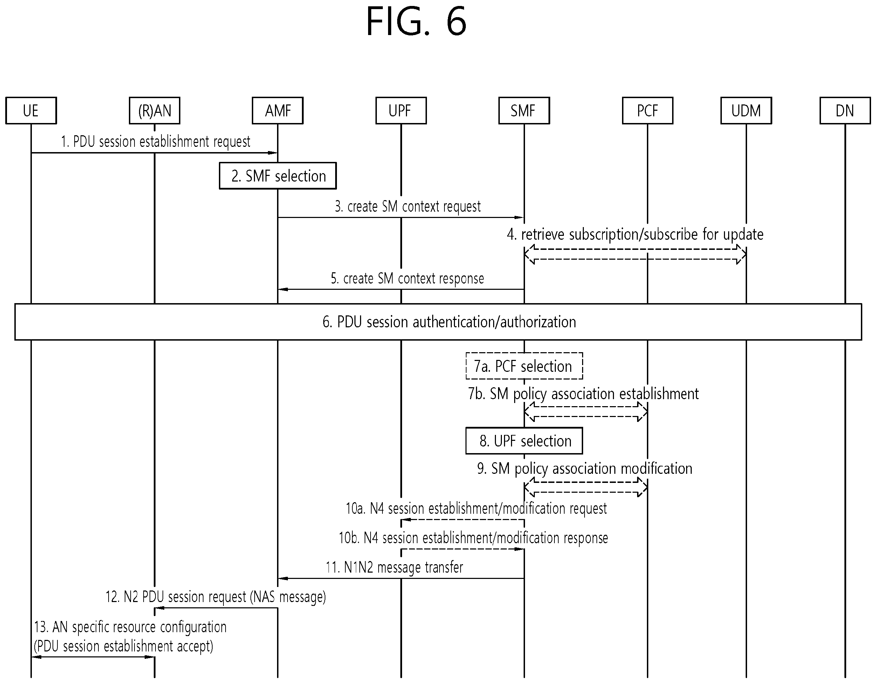

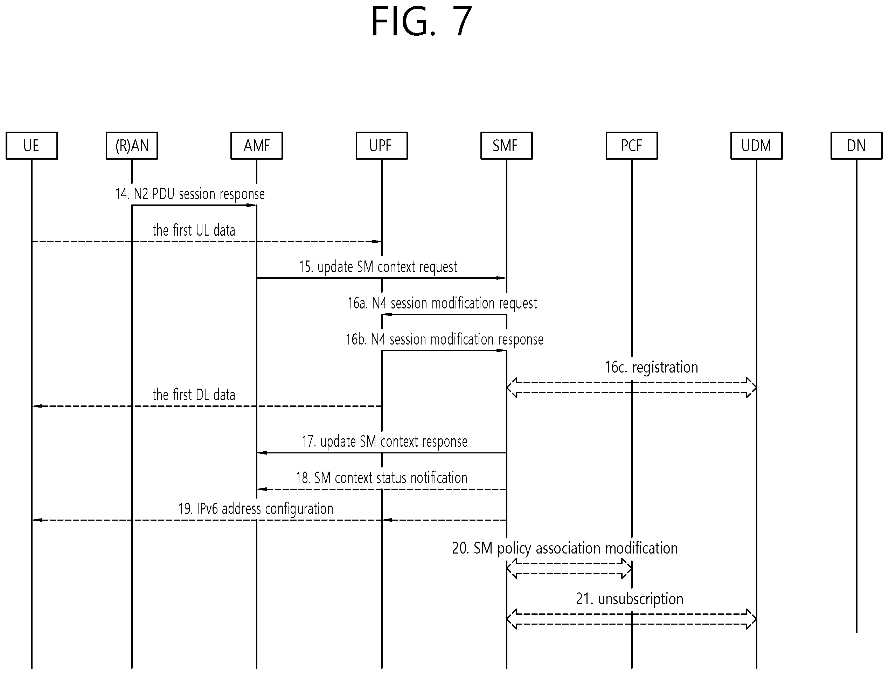

**FIGS. 6** **and** **7** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 6 and 7 specify the procedures for establishing PDU sessions associated with a single access type at a given time.

The procedure shown in FIGS. 6 and 7 assumes that the UE has already registered on the AMF thus unless the UE is emergency registered the AMF has already retrieved the user subscription data from the UDM.

First, procedures of FIG. 6 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 7, which follow the procedures of FIG. 6, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

In the present specification, a technology related to a mechanism for QoS handling may be described.

Whether to use a tethered device may be determined by a terminal/user (UE/user).

According to an embodiment of the present specification, a network (5GC) may identify whether a tethered device is used. Then, the network may effectively perform the following control:
- Authorizing the provision of a corresponding service for a corresponding UE based on subscriber information
- QoS handling according to whether a tethered device is used

Methods proposed in the present specification are described below. The methods described below may be performed or used in combination or complementarily.

A method proposed in the present specification may refer to the architecture, framework, and QoS model specified in TS 23.501 v18.3.0, TS 23.502 v18.3.0, and TS 23.503 v18.3.0.

Whether and/or how the 5GC should identify that the UE uses XR traffic for a tethered device may be an issue.

Whether and/or how the 5GC should authorize the UE to use a tethered device for XR traffic may be an issue.

In the present specification, a tethered PDU session/a PDU session for a tethering service may be: an independent PDU session for the purpose of transmitting tethered user data and control signals, or a PDU session that is created for another purpose but intended to perform transmission of tethered user data and control signals through a modification procedure (change of attributes of the PDU session).

Embodiments described in the present specification may be performed in combination with each other.

### 1. First Embodiment

The following drawings are prepared to explain a specific example of the present specification. Since the specific names of devices or the specific names of signals/messages/fields described in the drawings are presented as examples, technical features of the present specification are not limited to the specific names used in the following drawings.

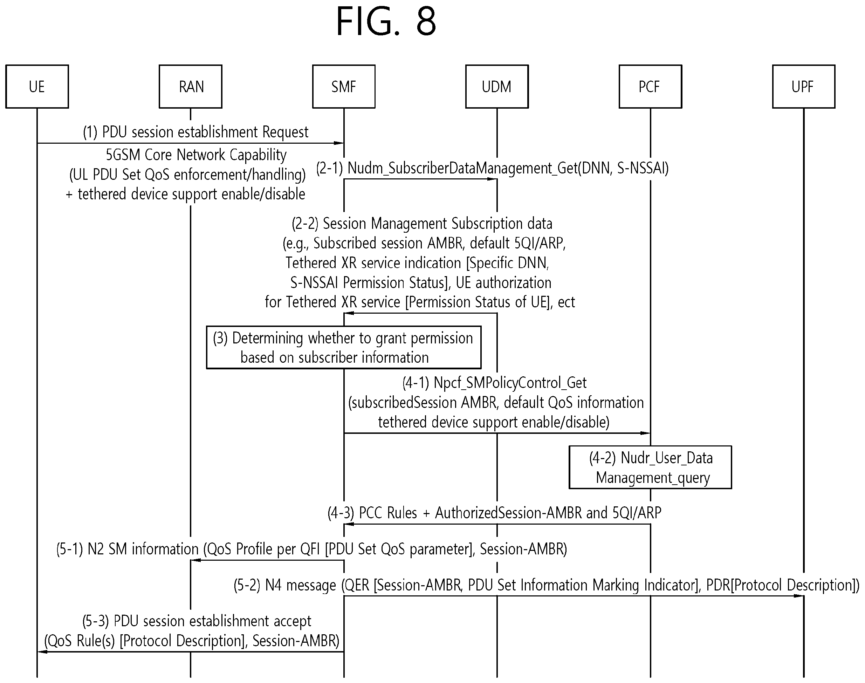

**FIG. 8** **shows an example of a flowchart according to the first embodiment of the present specification.**

### (1) step 1

A UE may transmit a PDU session establishment request to a network control node (SMF).

The PDU session establishment request may include whether to support a tethered device.

The PDU session establishment request may include whether a function for supporting a tethered device is enabled. For example, the PDU session establishment request may include whether the UE is currently in a state capable of using a tethered device.

The PDU session establishment request may include whether an uplink (UL) PDU set QoS enforcement/handling function, a QoS enforcement/handling function (when a tethered device is used), and/or a tethered device support capability are enabled/disabled. For example, the UE may inform the network control node (SMF) of the aforementioned information.

The QoS enforcement/handling function may be a capability required to support a tethering service. The tethering service may mean a service in which the UE uses a tethered device.

Only when a tethered PDU session is established (or when a session is related to a tethering service) (for example, including both a case of creating an independent PDU session for the purpose of transmitting tethered user data and control signals, or a case of changing attributes of a PDU session through a PDU session modification procedure so that transmission of tethered user data and control signals can also be included in the PDU session created for another purpose), the PDU session establishment request may include whether the tethered device support capability is enabled/disabled.

The UE may recognize that the PDU session is for tethering (a session related to a tethering service) based on a pre-configured local policy or a pre-provisioned URSP rule, QoS rule, etc.

For example, based on connection capabilities of a traffic descriptor of the URSP rule, the UE may determine that the corresponding session is for tethering (a session related to a tethering service).

When the UE first transmits an establishment request for a PDU session for tethering, the UE may include only tethered device support capability information for XR in the establishment request. Thereafter, if a tethered device is attached to (or connected to) the UE, the UE may inform the SMF that it serves for the tethered device (or that the corresponding session is used for the tethered device) through a PDU session modification procedure. The corresponding content may be informed to the SMF through a PDU session modification request.

Based on a pre-configured local policy or a pre-provisioned URSP rule, QoS rule (received from the SMF), etc., the UE may determine that a device connected to itself is a device for a tethering service (or that a tethering device of a specific address/type is connected to itself through Bluetooth/Wi-Fi).

For example, if the tethered device is an XR (Extended Reality) device, the tethered device may transmit its IP information, etc., to a server through application layer signaling. Then, the server may request QoS from the 5GC to the AF (a procedure such as TS 23.502 v18.3.0 clause 4.15.6.6 (Setting up an AF session with required QoS procedure) may be referred to). Based on this, when the SMF transmits a QoS rule to the UE, the UE may determine that the device connected to itself is a device for a tethering service based on traffic filter information in the QoS rule.

For example, based on source IP address/port information, etc., in the traffic filter information, the UE may determine that the device connected to itself is a device for a tethering service.

Alternatively, for example, based on a device name for a device connected to itself, hardware/software information, QoS information requested by the device, etc., the UE may determine that the device connected to itself is a device for a tethering service.

The PDU session establishment/modification request may include a UE 5GSM Core Network Capability.

The UE 5GSM Core Network Capability may include information on whether the UE supports the following functions. For example, the UE may indicate whether it supports the following functions in the UE 5GSM Core Network Capability:
- "Ethernet" PDU Session Type is supported in EPC as PDN Type "Ethernet";
- Reflective QoS;
- Multi-homed IPv6 PDU session (only when the Requested PDU Type is set to "IPv6" or "IPv4v6");
- ATSSS capability;
- Transfer of Port Management Information containers;
- UL PDU Set QoS enforcement based on the RTP Header Extension for PDU Set Marking as defined in TS 26.522;
- Tethered device support capability (a specialized function for a tethered device, a function capable of changing an applied QoS rule to detect/enforce uplink traffic according to a QoS rule provided by a network to be applied when a tethered device exists, etc.);
- Tethered device support capability enabled/disabled information.

The aforementioned tethered device support capability enabled/disabled information may be delivered through a parameter field of another NAS other than the UE 5GSM Core Network Capability.

Activation of the tethered device support capability may mean that a tethered device is physically already connected to the UE. Alternatively, activation of the tethered device support capability may mean a possibility that a tethered device will be connected to the UE.

Activation of the tethered device support capability means that the UE is currently in a state capable of using a tethered device. Deactivation of the tethered device support capability means that the UE is currently in a state unable to use a tethered device.

The aforementioned UL PDU Set QoS enforcement and the tethered device support capability may be transmitted to the network respectively.

Alternatively, the aforementioned UL PDU Set QoS enforcement and the tethered device support capability may be transmitted to the network as one capability by involving the functions with each other.

The 5GSM Core Network Capability may be transmitted from a V-SMF to an H-SMF during a PDU session establishment/modification procedure if necessary.

After a first inter-system change from EPS to 5GS is performed for a PDU session established in EPS, the 5GSM Core Network Capability may also be included in PDU session modification if there is a reflective QoS and/or a multi-homed IPv6 PDU session.

### (2) step 2

A network control node (SMF) may obtain subscriber information related to a session.

The network control node (SMF) may obtain subscriber information related to a session from a UDM.

The subscriber information may include information on whether a tethered XR service is allowed for the corresponding session.

The subscriber information may include a Tethered XR service indication.

The Tethered XR service indication may indicate whether a DNN and/or S-NSSAI are used for a tethered XR service.

For example, the Tethered XR service indication may indicate whether a DNN and/or S-NSSAI related to the corresponding session are used (or allowed) for a tethered XR service.

The subscriber information may include a UE authorization for Tethered XR service.

The UE authorization for Tethered XR service may indicate whether the UE has authority to use a 5GC-supported tethered XR service.

### (3) step 3

Based on information received from the UE, subscriber information, local configuration information of the SMF, an operator policy, etc., the SMF may determine whether to authorize a service for the UE and a tethered device of the corresponding PDU session.

The SMF determines whether to authorize specialized QoS enforcement/handling of the UE using a tethered device. QoS enforcement/handling may mean a service for a tethered device.

### (4) step 4

The SMF may perform interaction with a PCF to receive a policy for providing appropriate QoS.

At this time, the SMF may include tethered device support capability enabled/disabled information received from the UE in a message sent to the PCF.

Based on this, the PCF may generate a PCC rule.

The PCF may transmit the generated PCC rule to the SMF.

### (5) step 5

The SMF may process the received PCC rule.

The SMF may transmit information processed from the PCC rule to the UE, NG-RAN, and UPF.

For example, the information processed from the PCC rule may be relevant information for QoS handling.

For example, the information processed from the PCC rule may be a PDU Set QoS parameter. The SMF may transmit the PDU Set QoS parameter to a base station (e.g., RAN).

For example, the information processed from the PCC rule may be a QoS profile. The SMF may transmit the QoS profile to a base station (e.g., RAN).

For example, the information processed from the PCC rule may be a QoS rule. The SMF may transmit the QoS rule to the UE.

The UE may recognize whether a tethering service can be provided based on the received QoS rule.

If the tethering service is allowed, the UE may be provided with the tethering service.

### 2. Second Embodiment

The following drawings are prepared to explain a specific example of the present specification. Since the specific names of devices or the specific names of signals/messages/fields described in the drawings are presented as examples, technical features of the present specification are not limited to the specific names used in the following drawings.

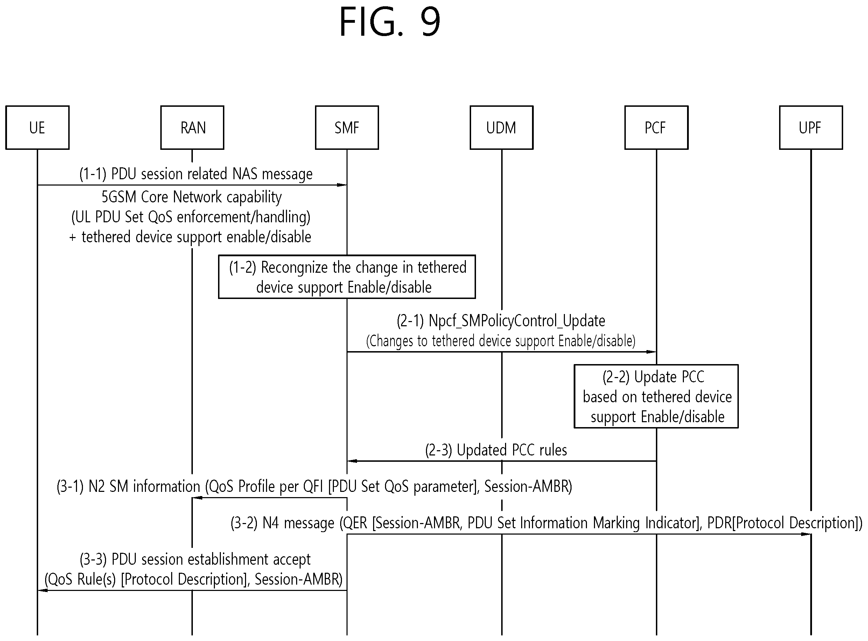

**FIG. 9** **shows an example of a flowchart according to the second embodiment of the present specification.**

A new PCRT (Policy Control Request Trigger) may be defined.

If a PCRT condition is met, the SMF may request a new policy from the PCF by utilizing a conventional 'SMF initiated SM Policy Association Modification'.

### (1) step 1

### 1) step 1-1

A UE may support a tethered device.

The UE may transmit tethered device support capability enabled/disabled information to a network control node (SMF).

The corresponding information may be included in a PDU session-related NAS message and transmitted. The PDU session-related NAS message may be a PDU session modification request message. The PDU session-related NAS message may be a PDU session establishment request message.

Based on a change in the information on the tethered device support capability enabled/disabled of the UE, the UE may transmit the tethered device support capability enabled/disabled information.

### 2) step 1-2

The SMF may recognize (or determine) a change in the tethered device support capability enabled/disabled information.

Information on the tethered device support capability enabled/disabled of the UE may already be stored in the SMF. Thereafter, the SMF may receive information on the tethered device support capability enabled/disabled from the UE. If the received information on the tethered device support capability enabled/disabled is different from the already stored tethered device support capability enabled/disabled information, the SMF may recognize a change in the tethered device support capability enabled/disabled information.

For example, the SMF may receive information from the UE that the tethered device support capability is enabled. The SMF may store information on activation for the corresponding function of the UE. Thereafter, it may receive information from the UE that the tethered device support capability is disabled. Since the corresponding function has been changed from enabled to disabled, the SMF may recognize a change in the tethered device support capability enabled/disabled information.

For example, the SMF may receive information from the UE that the tethered device support capability is disabled. The SMF may store information on deactivation for the corresponding function of the UE. Thereafter, it may receive information from the UE that the tethered device support capability is enabled. Since the corresponding function has been changed from disabled to enabled, the SMF may recognize a change in the tethered device support capability enabled/disabled information.

Here, the change in the tethered device support capability enabled/disabled information may be a PCRT condition.

### (2) step 2

### 1) step 2-1

If the SMF recognizes (or determines) that the PCRT condition is met (change in the tethered device support capability enabled/disabled information), the SMF may perform a conventional 'SMF initiated SM Policy Association Modification'.

If the SMF recognizes (or determines) that the PCRT condition is met (change in the tethered device support capability enabled/disabled information), the SMF may transmit a Npcf_SMPolicyControl_Update to the PCF to request an update of a PCC rule. The Npcf_SMPolicyControl_Update may include the tethered device support capability enabled/disabled information received by the SMF from the UE.

### 2) step 2-2

Based on information received from the SMF (e.g., received tethered device support capability enabled/disabled information), the PCF may update a PCC rule.

### 3) step 2-3

The PCF may transmit the updated PCC rule to the SMF.

The updated PCC rule may include information on a Change of tethered device support availability.

The information on a Change of tethered device support availability may include information that the tethered device support capability of the UE is enabled (or disabled) for a tethered XR service.

### (3) step 3

The SMF may process the received PCC rule.

The SMF may transmit information processed from the PCC rule to the UE, NG-RAN, and UPF.

For example, the information processed from the PCC rule may be relevant information for QoS handling.

For example, the information processed from the PCC rule may be a PDU Set QoS parameter. The SMF may transmit the PDU Set QoS parameter to a base station (RAN).

For example, the information processed from the PCC rule may be a QoS profile. The SMF may transmit the QoS profile to a base station (RAN).

For example, the information processed from the PCC rule may be a QoS rule. The SMF may transmit the QoS rule to the UE.

The second embodiment may be performed after the first embodiment is performed.

For example, according to the first embodiment, the UE may start a session establishment procedure while transmitting tethered device support capability enabled/disabled information to the SMF. And, according to the first embodiment, a tethered device service may be allowed for the corresponding session for the UE. Thereafter, if the UE transmits tethered device support capability enabled/disabled information different from before to the SMF, the second embodiment may be performed.

### 3. Third Embodiment

The following drawings are prepared to explain a specific example of the present specification. Since the specific names of devices or the specific names of signals/messages/fields described in the drawings are presented as examples, technical features of the present specification are not limited to the specific names used in the following drawings.

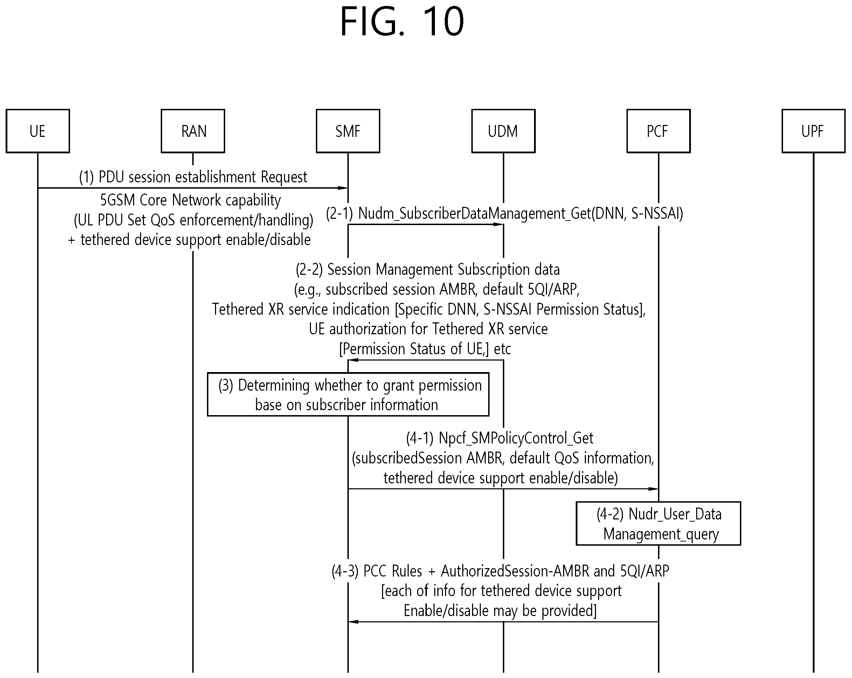

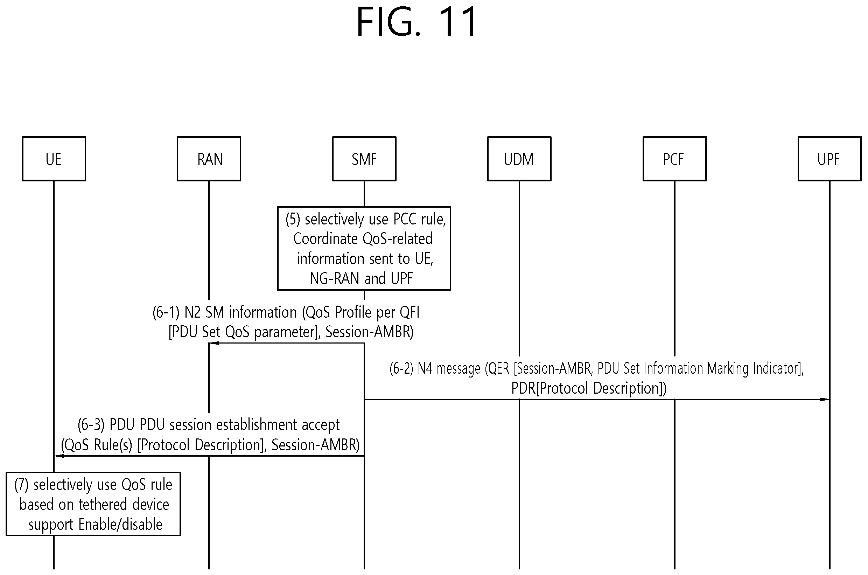

**FIG. 10** **and** **FIG. 11** **show examples of flowcharts according to the third embodiment of the present specification.**

The PCF may transmit policy information for each of the tethered device support capability enabled/disabled (e.g., both a policy for activation and a policy for deactivation) to the SMF.

Based on this, the SMF may selectively use a PCC rule.

### (1) step 1- step 4

Step 1- step 4 described in Embodiment 1 may be performed.

However, in step 4-3, information transmitted by the PCF to the SMF may include all of the following information:
- A policy for tethered device support capability enabled
- A policy for tethered device support capability disabled

### (5) step 5

According to the tethered device support capability enabled/disabled information sent by the UE, the SMF may selectively apply a PCC rule. For example, the SMF may adjust QoS-related information sent to the UE, NG-RAN, and UPF.

For example, if the UE transmits information that the tethered device support capability is enabled in step 1, the SMF may select and apply a policy for tethered device support capability enabled among information received from the PCF. Accordingly, the SMF may process the policy for tethered device support capability enabled.

For example, if the UE transmits information that the tethered device support capability is disabled in step 1, the SMF may select and apply a policy for tethered device support capability disabled among information received from the PCF. Accordingly, the SMF may process the policy for tethered device support capability disabled.

### (6) step 6

The SMF may transmit the processed information to the UE, NG-RAN, and UPF.

For example, the processed information may be relevant information for QoS handling.

For example, the processed information may be a PDU Set QoS parameter. The SMF may transmit the PDU Set QoS parameter to a base station (RAN).

For example, the processed information may be a QoS profile. The SMF may transmit the QoS profile to a base station (RAN).

For example, the processed information may be a QoS rule. The SMF may transmit the QoS rule to the UE.

The QoS rule transmitted to the UE may be a QoS rule for the tethered device support capability enabled/disabled information transmitted by the UE in step 1.

For example, if the terminal transmits information in step 1 that the tethered device support capability is enabled, the QoS rule transmitted to the terminal may be a QoS rule for enabling the tethered device support capability.

Alternatively, the QoS rule transmitted to the UE may include both a QoS rule for tethered device support capability enabled and a QoS rule for tethered device support capability disabled. Step 7 described below assumes this case.

### (7) step 7

The UE may apply a corresponding QoS rule according to a tethered device support capability enabled/disabled state.

Additionally, the UE may include the following content in a subsequent procedure message sent to the network thereafter:
- Tethered device support capability enabled/disabled information
- Information informing that the UE has both a QoS rule for tethered device support capability enabled and a QoS rule for tethered device support capability disabled, and information informing that the corresponding rules can be applied

According to the disclosure of the present specification, the following operations may be performed.
- A first network node (e.g. SMF) may determine whether a corresponding terminal uses a service based on a capability and capability enabled/disabled information of a terminal using a tethered device for an XR service, and subscriber information, and may send a result of the determination to the terminal.
- A second network node (e.g. PCF) may generate a PCC rule based on the capability and capability enabled/disabled information of the terminal using a tethered device for an XR service, and may deliver it to another network node.
- The first network node (e.g. SMF) may recognize whether a tethered device support capability enabled/disabled state is changed. If a PCRT condition is met, the first network node (e.g. SMF) may request a policy update from the second network node (e.g. PCF) and may receive an updated PCC rule.
- The first network node (e.g. SMF) may receive each PCC rule according to a tethered device support capability enabled/disabled state from the second network node (e.g. PCF), and may selectively use a PCC rule according to the state.
- The terminal may receive each QoS rule according to a tethered device support capability enabled/disabled state received from the network, and may selectively use a PCC rule according to the state. Additionally, subsequent procedure messages sent to the network may include not only information on enabling/disabling tethered device support capability, but also relevant QoS rules. Information indicating that such rules can be applied may also be sent to the network.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

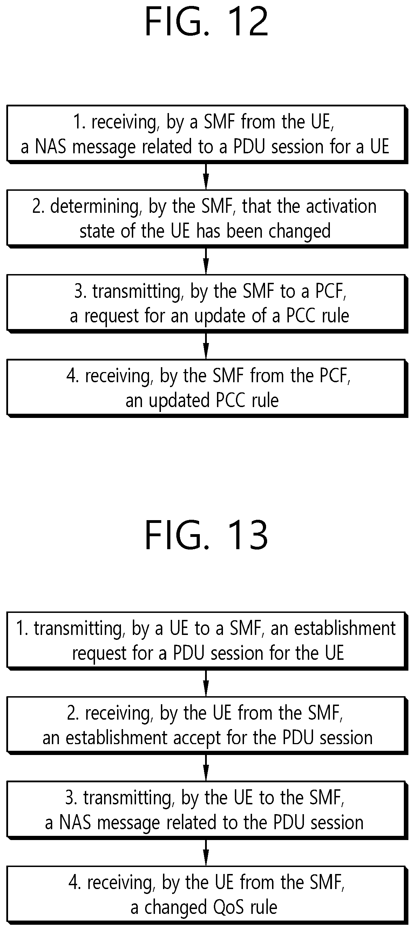

**FIG. 12** **shows the procedure of the SMF according to disclosure of the present specification.**
1. The SMF may receive, by a Session Management Function (SMF) from the UE, a Non-Access-Stratum (NAS) message related to a Protocol Data Unit (PDU) session for a User Equipment (UE).

The UE may have capability to support a tethering service using a tethered device.

Before the SMF receives the NAS message, first state information indicating an activation state of the capability of the UE may be stored in the SMF;
The NAS message may include second state information indicating an activation state of the capability of the UE.

2. Based on the first state information and the second state information being different,
the SMF may determine, by the SMF, that the activation state of the UE has been changed.

3. The SMF may transmit, by the SMF to a Policy Control Function (PCF), a request for an update of a Policy and Charging Control (PCC) rule, based on the determination.

The request may include the second activation state information.

4. The SMF may receive, by the SMF from the PCF, an updated PCC rule, based on the request.

The SMF may generate, by the SMF, a changed Quality of Service (QoS) rule, based on the updated PCC rule.

The SMF may transmit, by the SMF to the UE, the changed QoS rule.

The SMF may receive, by the SMF from the UE, an establishment request for the PDU session before the SMF receives the NAS message.

The establishment request may include information on the capability of the UE.

The establishment request may include the first state information.

The SMF may obtain, by the SMF from a Unified Data Management (UDM), subscriber information, based on the establishment request.

The SMF may determine, by the SMF, to allow the tethering service for the UE, based on the subscriber information.

The SMF may receive, by the SMF from the PCF, a PCC rule, based on the determination of the SMF to allow the tethering service.

The SMF may determine, by the SMF, a QoS rule, based on the PCC rule.

The SMF may transmit, by the SMF, an establishment accept for the PDU session to the UE.

The establishment accept may include the QoS rule.

The subscriber information may include information that the tethering service is allowed for a Data Network Name (DNN) or Single-Network Slice Selection Assistance Information (S-NSSAI) related to the PDU session.

The subscriber information may include information that the tethering service is allowed for the UE.

The NAS message may be a modification request message for the PDU session.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

**FIG. 13** **shows the procedure of the UE according to disclosure of the present specification.**
1. The UE may transmit, by a User Equipment (UE) to a Session Management Function (SMF), an establishment request for a Protocol Data Unit (PDU) session for the UE.

The UE may have capability to support a tethering service using a tethered device.

The establishment request may include first state information.

The UE may receive, by the UE from the SMF, an establishment accept for the PDU session, based on the establishment request.

The establishment accept may include a Quality of Service (QoS) rule.

The UE may transmit, by the UE to the SMF, a Non-Access-Stratum (NAS) message related to the PDU session, based on an activation state of the UE being changed from the first state information to second state information.

The NAS message may include the second state information indicating an activation state of the capability of the UE.

The UE may receive, by the UE from the SMF, a changed QoS rule, based on the first state information and the second state information being different.

The establishment request may include information on the capability of the UE.

The NAS message may be a modification request message for the PDU session.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: receiving, by a Session Management Function (SMF) from the UE, a Non-Access-Stratum (NAS) message related to a Protocol Data Unit (PDU) session for a User Equipment (UE); wherein the UE has capability to support a tethering service using a tethered device, wherein, before the SMF receives the NAS message, first state information indicating an activation state of the capability of the UE is stored in the SMF; wherein the NAS message includes second state information indicating an activation state of the capability of the UE; determining, by the SMF, that the activation state of the UE has been changed, based on the first state information and the second state information being different; transmitting, by the SMF to a Policy Control Function (PCF), a request for an update of a Policy and Charging Control (PCC) rule, based on the determination; wherein the request includes the second activation state information; and receiving, by the SMF from the PCF, an updated PCC rule, based on the request.

Hereinafter, a processor for providing communication according to some embodiments of the present specification will be described.

The processor is configured to: receiving, by a Session Management Function (SMF) from the UE, a Non-Access-Stratum (NAS) message related to a Protocol Data Unit (PDU) session for a User Equipment (UE); wherein the UE has capability to support a tethering service using a tethered device, wherein, before the SMF receives the NAS message, first state information indicating an activation state of the capability of the UE is stored in the SMF; wherein the NAS message includes second state information indicating an activation state of the capability of the UE; determining, by the SMF, that the activation state of the UE has been changed, based on the first state information and the second state information being different; transmitting, by the SMF to a Policy Control Function (PCF), a request for an update of a Policy and Charging Control (PCC) rule, based on the determination; wherein the request includes the second activation state information; and receiving, by the SMF from the PCF, an updated PCC rule, based on the request.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, by a Session Management Function (SMF) from the UE, a Non-Access-Stratum (NAS) message related to a Protocol Data Unit (PDU) session for a User Equipment (UE); wherein the UE has capability to support a tethering service using a tethered device, wherein, before the SMF receives the NAS message, first state information indicating an activation state of the capability of the UE is stored in the SMF; wherein the NAS message includes second state information indicating an activation state of the capability of the UE; determining, by the SMF, that the activation state of the UE has been changed, based on the first state information and the second state information being different; transmitting, by the SMF to a Policy Control Function (PCF), a request for an update of a Policy and Charging Control (PCC) rule, based on the determination; wherein the request includes the second activation state information; and receiving, by the SMF from the PCF, an updated PCC rule, based on the request.

The present specification may have various effects.

For example, depending on whether the tethered device support function is enabled, appropriate QoS rules can be effectively provided to the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method comprising:
receiving, by a Session Management Function (SMF) from the UE, a Non-Access-Stratum (NAS) message related to a Protocol Data Unit (PDU) session for a User Equipment (UE);
wherein the UE has capability to support a tethering service using a tethered device,
wherein, before the SMF receives the NAS message, first state information indicating an activation state of the capability of the UE is stored in the SMF;
wherein the NAS message includes second state information indicating an activation state of the capability of the UE;
determining, by the SMF, that the activation state of the UE has been changed, based on the first state information and the second state information being different;
transmitting, by the SMF to a Policy Control Function (PCF), a request for an update of a Policy and Charging Control (PCC) rule, based on the determination;
wherein the request includes the second activation state information; and
receiving, by the SMF from the PCF, an updated PCC rule, based on the request.

2. The method of claim 1, further comprising:
generating, by the SMF, a changed Quality of Service (QoS) rule, based on the updated PCC rule; and
transmitting, by the SMF to the UE, the changed QoS rule.

3. The method of claim 1 or 2, further comprising:
receiving, by the SMF from the UE, an establishment request for the PDU session before the SMF receives the NAS message,
wherein the establishment request includes information on the capability of the UE; and
wherein the establishment request includes the first state information.

4. The method of claim 3, further comprising:
obtaining, by the SMF from a Unified Data Management (UDM), subscriber information, based on the establishment request;
determining, by the SMF, to allow the tethering service for the UE, based on the subscriber information;
receiving, by the SMF from the PCF, a PCC rule, based on the determination of the SMF to allow the tethering service;
determining, by the SMF, a QoS rule, based on the PCC rule;
transmitting, by the SMF, an establishment accept for the PDU session to the UE, and
wherein the establishment accept includes the QoS rule.

5. The method of claim 4,
wherein the subscriber information includes information that the tethering service is allowed for a Data Network Name (DNN) or Single-Network Slice Selection Assistance Information (S-NSSAI) related to the PDU session.

6. The method of claim 4,
wherein the subscriber information includes information that the tethering service is allowed for the UE.

7. The method of any one of claims 1 to 6,
wherein the NAS message is a modification request message for the PDU session.

8. A method comprising:
transmitting, by a User Equipment (UE) to a Session Management Function (SMF), an establishment request for a Protocol Data Unit (PDU) session for the UE;
wherein the UE has capability to support a tethering service using a tethered device,
wherein the establishment request includes first state information;
receiving, by the UE from the SMF, an establishment accept for the PDU session, based on the establishment request;
wherein the establishment accept includes a Quality of Service (QoS) rule;
transmitting, by the UE to the SMF, a Non-Access-Stratum (NAS) message related to the PDU session, based on an activation state of the UE being changed from the first state information to second state information;
wherein the NAS message includes the second state information indicating an activation state of the capability of the UE; and
receiving, by the UE from the SMF, a changed QoS rule, based on the first state information and the second state information being different.

9. The method of claim 8,
wherein the establishment request includes information on the capability of the UE.

10. The method of claim 8 or 9,
wherein the NAS message is a modification request message for the PDU session.

11. A Session Management Function (SMF) comprising:
at least one transceiver; and
at least one processor,
wherein the at least one processor performs operation that is a method of one of the claims 1 to 7.

12. A User Equipment (UE) comprising:
at least one transceiver; and
at least one processor,
wherein the at least one processor performs operation that is a method of one of the claims 8 to 10.

13. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 8 to 10.

14. A non-volatile computer readable storage medium having recorded instructions,
wherein the instructions, based on being executed by one or more processors, cause the one or more processors to perform operation that is a method of one of the claims 8 to 10.
